# EUROPEAN PATENT APPLICATION

(11) **EP 4 610 112 A1**
(43) Date of publication of application: **03.09.2025**
(21) Application number: 23899876.9
(22) Date of filing: 30.11.2023
(51) Int. Cl.: B60R 11/04, B60R 11/00, B60R 1/29, B60W 40/08, B60R 16/02

(54) **DRIVER MONITORING SYSTEM**

(30) Priority: 08.12.2022 CN 202211573592
(71) Applicant: Tianjin Jingwei Hirain Technologies Co., Ltd., Tianjin 300380 (CN)
(72) Inventor: CHEN, Zhenghua, Tianjin 300380 (CN); AI, Xiujun, Tianjin 300380 (CN)
(74) Representative: Viering, Jentschura & Partner mbB Patent- und Rechtsanwälte
(86) International application number: PCT/CN2023/135501
(87) International publication number: WO 2024/120298

(57) **Abstract**

A driver monitoring system, comprising a camera module (10), a controller (20), and a circuit board (30). The circuit board (30) comprises a first connecting section (31), a second connecting section (32), and a curved transition section (33). The first connecting section (31) is formed to extend along a first direction (x). The camera module (10) is mounted on the first connecting section (31). The curved transition segment (33) is bent from a light inlet side of the first connecting section (31) facing away from the camera module (10). The second connecting section (32) is connected to the side of the curved transition segment (33) facing away from the first connecting section (31). The second connecting section (32) extends in the second direction (y). The controller (20) is mounted on the second connecting section (32). The second direction (y) intersects the first direction (x).

## Description

### CROSS-REFERENCE TO RELATED APPLICATION

The present disclosure claims priority to Chinese Patent Application No. 202211573592.7 entitled "DRIVER MONITORING SYSTEM" filed on December 8, 2022, which is incorporated herein by reference in its entirety.

### TECHNICAL FIELD

The present disclosure relates to the field of automotive technology, and particularly, to driver monitoring systems.

### BACKGROUND

A driver monitoring system (DMS) is used for monitoring a driver's condition to find that the driver is distracted, fatigue or dozing, and other conditions in which the driver is not able to drive. As the degree of automobile intelligence and the degree of emphasis by people on the active safety system are increased, the application of DMS is more popular. The traditional DMS system is generally divided into two parts: the DMS camera and the DMS controller, the camera is responsible for collecting video information and transmitting it to the controller, and the controller makes an algorithmic decision and sends a corresponding instruction to an actuator.

### SUMMARY

Embodiments of the present disclosure provide a driver monitoring system including a camera module, a controller and a circuit board, and the camera module is configured to collect driver information; the controller is configured to receive the driver information collected by the camera module; the circuit board includes a first connection segment, a second connection segment and a curved surface transition segment, the first connection segment is formed to extend along a first direction, and the camera module is mounted on the first connection segment; the curved surface transition segment is bent from the first connection segment away from a light-entering side of the camera module; the second connection segment is connected to a side of the curved surface transition segment away from the first connection segment, the second connection segment is formed to extend along a second direction, the controller is mounted on the second connection segment, and the second direction intersects with the first direction.

### BRIEF DESCRIPTION OF THE DRAWINGS

In order to more clearly illustrate the technical solutions of the embodiments of the present disclosure, the drawings to be used in the embodiments of the present disclosure will be briefly introduced below. It is obvious that the drawings described below are merely some embodiments of the present disclosure, and for those of ordinary skill in the art, other drawings can be obtained based on these drawings without inventive effort.
Fig. 1 is a schematic structural view of a driver monitoring system according to some embodiments of the present disclosure;
Fig. 2 shows a schematic exploded structural view of a driver monitoring system in Fig. 1 of an example;
Fig. 3 shows a schematic structural view of a sensor, a controller, a circuit board and a light-emitting source in Fig. 2 of an example;
Fig. 4 shows a schematic structural view of an upper housing body and a positioning protrusion in Fig. 2 of an example;
Fig. 5 shows a schematic structural view of an upper housing body and a positioning protrusion in Fig. 2 of an example in another view;
Fig. 6 shows a schematic structural view of a support base, a positioning groove and a stop block in Fig 2 of an example;
Fig. 7 shows a schematic structural view of a lens hood and a fixing groove in Fig. 2 of an example.

Reference signs:
10: Camera module; 11: Sensor; 12: Lens; 13: Sealing ring;
20: Controller; 21: External main connector;
30: Circuit board; 31: First connection segment; 311: Heat-insulation groove; 32: Second connection segment; 33: Curved surface transition segment;
40: Upper housing body; 41: First support portion; 411: Positioning protrusion; 42: Second support portion; 421: Positioning pillar; 43: Heat dissipation portion; 431: Heat dissipation rib; 44: Boss portion;
50: Light-emitting source;
60: Support base; 61: Positioning groove; 62: Stop block;
70: Lens hood; 71: Fixing groove;
80: Lower housing body;
x: First direction; y: Second direction; z: Third direction.

### DETAILED DESCRIPTION

Features and exemplary embodiments of various aspects of the present disclosure will be described in detail below. In order to make the objects, technical solutions and advantages of the present disclosure clearer, the present disclosure is further described in detail below with reference to the accompanying drawings and specific embodiments. It should be understood that the specific embodiments described herein are merely intended to explain the present disclosure, rather than to limit the present disclosure. For those skilled in the art, the present disclosure can be implemented without some of these specific details. The following description of the embodiments is only to provide a better understanding of the present disclosure by illustrating examples of the present disclosure.

It should be noted that, in the present disclosure, the relational terms, such as first and second, are used merely to distinguish one entity or operation from another entity or operation, without necessarily requiring or implying any actual such relationships or orders for these entities or operations. Moreover, the terms "comprise", "include", or any other variants thereof, are intended to represent a non-exclusive inclusion, such that a process, method, article or device including a series of elements includes not only those elements, but also other elements that are not explicitly listed or elements inherent to such a process, method, article or device. Without more constraints, the elements following an expression "comprise/include..." do not exclude the existence of additional identical elements in the process, method, article or device that includes the elements.

The applicant has found that, in the related art, the camera module and the controller in the driver monitoring system are designed as discrete structures, and the camera module is connected to the controller by a wire harness, so that the DMS system occupies a large space of an entire vehicle, and wiring is complex and is difficult to arrange.

In view of the above problem, the applicant proposes a driver monitoring system including a camera module, a controller and a circuit board, and the camera module is configured to collect driver information; the controller is configured to receive the driver information collected by the camera module; the circuit board includes a first connection segment, a second connection segment and a curved surface transition segment, the first connection segment is formed to extend along a first direction, and the camera module is mounted on the first connection segment; the curved surface transition segment is bent from the first connection segment away from a light-entering side of the camera module; the second connection segment is connected to a side of the curved surface transition segment away from the first connection segment, the second connection segment is formed to extend along a second direction, the controller is mounted on the second connection segment, and the second direction intersects with the first direction.

A driver monitoring system according to the present disclosure includes a camera module, a controller and a circuit board, and the camera module is configured to collect driver information, the controller is configured to receive the driver information collected by the camera module, the circuit board includes a first connection segment, a second connection segment and a curved surface transition segment, the first connection segment is formed to extend along a first direction, the camera module is mounted on the first connection segment, the second connection segment is formed to extend along a second direction, the controller is mounted on the second connection segment, the curved surface transition segment is bent from the first connection segment away from a light-entering side of the camera module, and the second connection segment is connected to a side of the curved surface transition segment away from the first connection segment; by using an integrated design in which both the camera module and the controller are mounted on the circuit board, wires between the camera module and the controller are reduced, so that an installation process is simplified; by bending the curved surface transition segment by approximately 90 degrees, the second connection segment for mounting the controller may extend along a direction away from a light-entering side of the camera module, and under a condition that the driver monitoring system is arranged on an A-pillar or a steering column of an automobile, the second connection segment may be accommodated in a cavity within the A-pillar or the steering column through the curved surface transition segment, so that a difficulty of arranging the driver monitoring system is reduced.

A driver monitoring system according to embodiments of the present disclosure will be described below with reference to accompanying drawings. It is illustrated that a direction x in the accompanying drawings is a first direction, a direction y in the accompanying drawings is a second direction, and a direction z in the accompanying drawings is a third direction. In the accompanying drawings, dimensions in the accompanying drawings are not necessarily to scale with actual dimensions for ease of illustration.

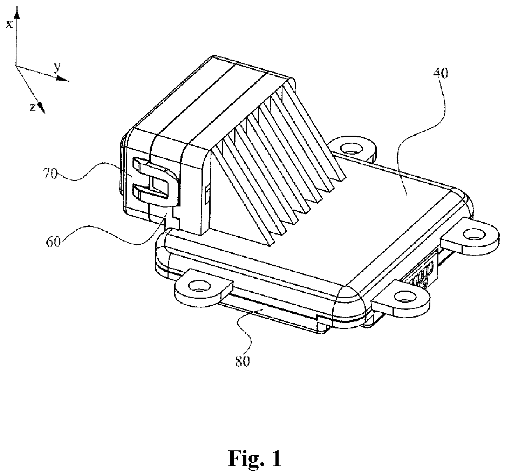

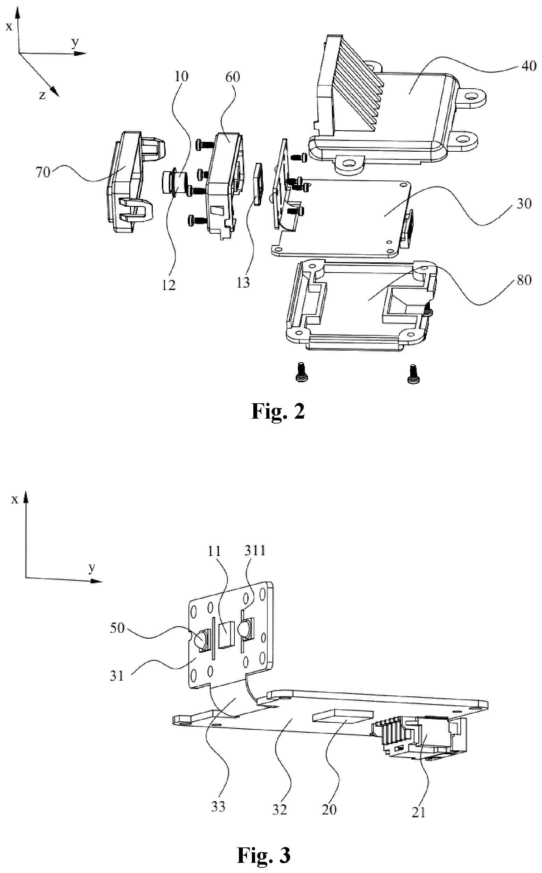

Referring to Fig. 1 to Fig. 3, Fig. 1 is a schematic structural view of a driver monitoring system according to some embodiments of the present disclosure; Fig. 2 shows a schematic exploded structural view of a driver monitoring system in Fig. 1 of an example; and Fig. 3 shows a schematic structural view of a sensor, a controller, a circuit board and a light-emitting source in Fig. 2 of an example.

As shown in Fig. 1 to Fig. 3, the present disclosure provides a driver monitoring system including a camera module 10, a controller 20 and a circuit board 30, the camera module 10 is configured to collect driver information; and the controller 20 is configured to receive the driver information collected by the camera module 10. The circuit board 30 includes a first connection segment 31, a second connection segment 32 and a curved surface transition segment 33, the first connection segment 31 is formed to extend along the first direction (the direction x in the drawing), and the camera module 10 is mounted on the first connection segment 31. The curved surface transition segment 33 is bent from the first connection segment 31 away from a light-entering side of the camera module 10. The second connection segment 32 is connected to a side of the curved surface transition segment 33 away from the first connection segment 31, the second connection segment 32 is formed to extend along the second direction (the direction y in the drawing), the controller 20 is mounted on the second connection segment 32, and the second direction y intersects with the first direction x.

Optionally, the first direction x is perpendicular to the second direction y, or an included angle between the first direction x and the second direction y is between 70 degrees and 110 degrees, and an angle between the first connection segment 31 and the second connection segment 32 is approximately 90 degrees. The circuit board 30 is a printed circuit board assembly (PCBA, a printed circuit board subjected to surface mount or dual in-line package). The controller 20 includes but is not limited to an image processing chip, a microcontroller unit (MCU) and a hardware driver, driver image information collected by the camera module 10 is transmitted to the controller 20, and the controller 20 determines a driver state through a built-in algorithm and sends a corresponding instruction to other actuators in the automobile.

Optionally, the driver monitoring system further includes an external main connector 21 mounted on the second connection segment 32, the external main connector 21 is electrically and communicatively connected to the controller 20 by the second connection segment 32, and the external main connector is used for being connected to other actuators in the automobile.

The driver monitoring system according to this embodiment includes the camera module 10, the controller 20 and the circuit board 30, the camera module 10 is configured to collect the driver information, and the controller 20 is configured to receive and process the driver information collected by the camera module 10. The circuit board 30 includes the first connection segment 31, the second connection segment 32 and the curved surface transition segment 33, the first connection segment 31 is formed to extend along the first direction x, the camera module 10 is mounted on the first connection segment 31, the second connection segment 32 is formed to extend along the second direction y, the controller 20 is mounted on the second connection segment 32, the curved surface transition segment 33 is bent from the first connection segment 31 away from the light-entering side of the camera module 10, and the second connection segment 32 is connected to the side of the curved surface transition segment 33 away from the first connection segment 31. By using an integrated design in which both the camera module 10 and the controller 20 are mounted on the circuit board 30, wires between the camera module 10 and the controller 20 are reduced, so that an installation process is simplified. By bending the curved surface transition segment by approximately 90 degrees, the second connection segment 32 for mounting the controller 20 may extend along a direction away from a light-entering side of the camera module 10, so that a volume of the driver monitoring system is reduced. Under a condition that the driver monitoring system is arranged on an A-pillar (not shown) or a steering column (not shown) of an automobile, the second connection segment 32 may be accommodated in a cavity within the A-pillar or the steering column through the curved surface transition segment 33, so that a difficulty of arranging the driver monitoring system is reduced.

In some optional embodiments, the circuit board 30 includes a rigid printed circuit board and a flexible printed circuit board, the first connection segment 31 and the second connection segment 32 are rigid printed circuit boards, and the curved surface transition segment 33 is a flexible printed circuit board.

Optionally, the circuit board 30 is a rigid and flex printed circuit board, and the rigid printed circuit board and the flexible printed circuit board are combined together through pressing and other processes, so that the circuit board 30 has both a rigid region and a flexible region.

In the driver monitoring system according to this embodiment, the first connection segment 31 and the second connection segment 32, which are the rigid printed circuit boards, may be installed only through a connecting piece such as a bolt, so that installation steps are simplified. And the curved surface transition segment 33, which is the flexible printed circuit board, achieves bending of the circuit board 30, so that the difficulty of arranging the driver monitoring system is reduced. The first connection segment 31 and the second connection segment 32 are located on two sides of the curved surface transition segment 33, respectively, and after the first connection segment 31 and the second connection segment 32 are installed and fixed, a position of the curved surface transition segment 33 is also fixed, so that it is not necessary to perform a connection process such as a welding fixation on the curved surface transition segment 33, thereby reducing installation procedures.

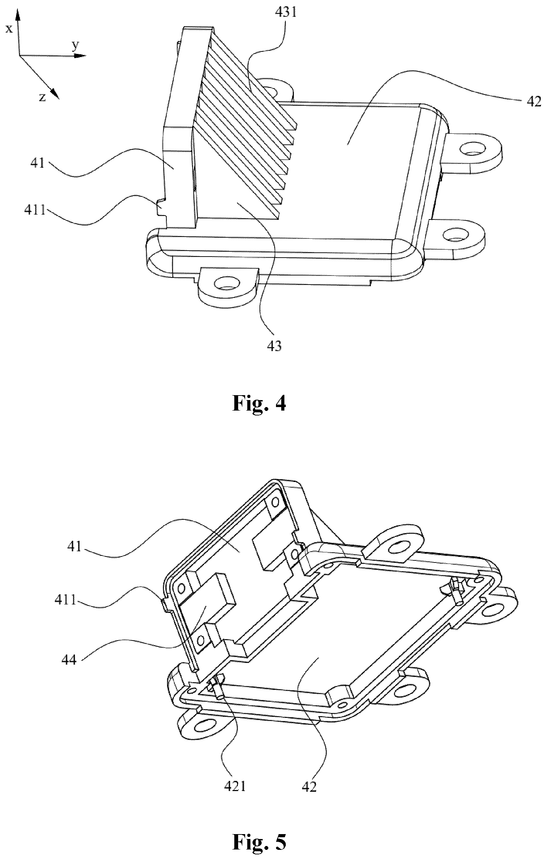

Referring to Fig. 1 to Fig. 4, Fig. 4 shows a schematic structural view of an upper housing body and a positioning protrusion in Fig. 2 of an example.

As shown in Fig. 1 to Fig. 4, in some optional embodiments, the driver monitoring system may further include an upper housing body 40, the upper housing body 40 includes a first support portion 41 and a second support portion 42, the first support portion 41 is used for supporting the first connection segment 31, and the first support portion 41 and the camera module 10 are located on two sides of the first connection segment 31, respectively. The second support portion 42 is used for supporting the second connection segment 32.

Optionally, the first support portion 41 is formed to extend along the first direction x, the second support portion 42 is formed to extend along the second direction y, and an angle between the first support portion 41 and the second support portion 42 is approximately 90 degrees. The first connection segment 31 is connected to the first support portion 41 by the connecting piece, and the second connection segment 32 is connected to the second support portion 42 by the connecting piece.

The driver monitoring system according to this embodiment further includes the upper housing body 40, the upper housing body 40 includes the first support portion 41 and the second support portion 42, the first connection segment 31 is supported by the first support portion 41, and the second connection segment 32 is supported by the second support portion 42, so that strength of the circuit board 30 is increased.

In some optional embodiments, the driver monitoring system further includes a light-emitting source 50 mounted on the first connection segment 31, the light-emitting source 50 and the first support portion 41 are located on two sides of the first connection segment 31, respectively, that is, the light-emitting source 50 and the camera module 10 are located on the same side of the first connection segment 31, and the light-emitting source 50 emits light towards a light-entering side of the camera module. The upper housing body 40 further includes a heat dissipation portion 43, the heat dissipation portion 43 is located on a side of the first support portion 41 away from the first connection segment 31, and an orthographic projection of the heat dissipation portion 43 on the first support portion 41 at least partially overlaps with an orthographic projection of the light-emitting source 50 on the first support portion 41.

Optionally, the light-emitting source 50 is an infrared fill light lamp which can emit infrared light and assist the camera module 10 in collecting an image at night.

In the driver monitoring system according to this embodiment, an ability of the camera module 10 to perform an image collection at night is improved through the light-emitting source 50, heat dissipation is performed by the heat dissipation portion 43 located on a position corresponding to the light-emitting source 50, and the heat generated by the light-emitting source 50 is transmitted to the air through the first connection segment 31, the first support portion 41, and finally through the heat dissipation portion 43, so that an effect of the heat generated by the light-emitting source 50 on other devices on the circuit board 30 is reduced.

In some optional embodiments, the heat dissipation portion 43 includes at least one heat dissipation rib 431, a plurality of heat dissipation ribs 431 extend along a third direction (a direction z in the drawing), the heat dissipation rib 431 is connected between the first support portion 41 and the second support portion 42, and the third direction z intersects with both the first direction x and the second direction y.

Optionally, the heat dissipation rib 431 is made of a material having a high thermal conductivity, such as aluminum alloy or copper alloy. An angle formed between the third direction z and the first direction x and an angle formed between the third direction z and the second direction y are acute angles.

In the driver monitoring system according to this embodiment, the heat generated by the light-emitting source 50 is transmitted to the air through the heat-dissipation rib 431 to help the light-emitting source 50 dissipate the heat, and meanwhile, the heat-dissipation rib 431 is connected to the first support portion 41 and the second support portion 42, so that the heat-dissipation rib 431, the first support portion 41 and the second support portion 42 form a stable triangular structure, thereby increasing strength of the upper housing body 40.

Referring to Fig. 3 to Fig. 5, Fig. 5 shows a schematic structural view of an upper housing body and a positioning protrusion in Fig. 2 of an example in another view.

As shown in Fig. 3 to Fig. 5, in some optional embodiments, the upper housing body 40 further includes a boss portion 44, the boss portion 44 protrudes from the first support portion 41 toward the first connection segment 31, and an orthographic projection of the boss portion 44 on the first support portion 41 at least partially overlaps with an orthographic projection of the light-emitting source 50 on the first support portion 41.

Optionally, two light-emitting sources 50 are located on two sides of the camera module 10, respectively, and two boss portions 44 correspond to two light-emitting sources 50, respectively. In practice, the boss portions 44 match a number and a position of the light-emitting sources 50.

In the driver monitoring system according to this embodiment, the boss portion 44 protruding toward the first connection segment 31 is connected to the first connection segment 31, and a position of the boss portion 44 corresponds to the light-emitting source 50, so that the heat generated by the light-emitting source 50 can be transmitted to the first support portion 41 through the boss portion 44 and finally to the heat dissipation portion 43, and other positions of first connection segments 31 are spaced apart from the first support portion 41, thereby reducing a probability that the heat is transmitted back to the first connection segment 31 through the first support portion 41, and further reducing the effect of the heat generated by the light-emitting source 50 on other devices on the circuit board 30.

In some optional embodiments, a thermal conductive adhesive (not shown) is provided between the boss portion 44 and the first connection segment 31, and the boss portion 44 is communicated with the first connection segment 31 by the thermal conductive adhesive.

In the driver monitoring system according to this embodiment, the thermal conductive adhesive is provided between the boss portion 44 and the first connection segment 31, so that efficiency of dissipating the heat generated by the light-emitting source 50 to the boss portion 44 is improved.

In some optional embodiments, the first connection segment 31 is provided with a heat insulation groove 311 penetrating through the first connection segment 31, and the light-emitting source 50 and the camera module 10 are located on two sides of the heat-insulation groove 311, respectively.

In the driver monitoring system according to this embodiment, the light-emitting source 50 is separated from the camera module 10 by the heat insulation groove 311, so that the heat transmitted from the light-emitting source 50 to the camera module 10 through the first connection segment 31 is reduced.

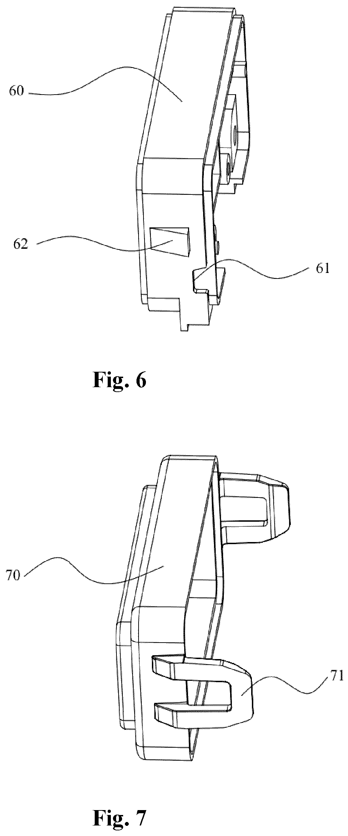

Referring to Fig. 2, Fig. 5 and Fig. 6, Fig. 6 shows a schematic structural view of a support base, a positioning groove and a stop block in Fig 2 of an example.

As shown in Fig. 2, Fig. 5 and Fig. 6, in some optional embodiments, the driver monitoring system further includes a support base 60, the support base 60 is connected to the first support portion 41, a first accommodation cavity (not shown) is formed between the support base 60 and the first support portion 41, and at least a part of the first connection segment 31 is located in the accommodation cavity.

Optionally, the first connection segment 31 is connected to the support base 60 by the connecting piece, and the support base 60 is connected to the first support portion 41 by the connecting piece, so that the first connection segment 31 is connected to the boss portion 44 by the thermal conductive adhesive. The connecting piece is the bolt. The first connection segment 31 is connected to the support base 60 by four bolts, and distances from four bolts to the camera module 10 are equal.

In the driver monitoring system according to this embodiment, the first connection segment 31 is accommodated in the first accommodation cavity between the first support portion 41 and the support base 60, the first connection segment 31 is connected to the support base 60 by four bolts, and the distances between four bolts and the camera module 10 are equal, so that force exerted on the first connection segment 31 from all directions by the bolts is more balanced, a stress concentration on the first connection segment 31 is reduced, and service life of the circuit board 30 is increased.

In some optional embodiments, the support base 60 is provided with a via (not shown) extending along the second direction y, and a projection of the camera module 10 on the first connection segment 31 at least partially overlaps with a projection of the via on the first connection segment 31.

Optionally, an orthographic projection of the via on the first connection segment 31 at least partially overlaps with an orthographic projection of the light-emitting source 50 on the first connection segment 31, so light generated by the light-emitting source 50 can be emitted from the via to the first accommodation cavity.

In some optional embodiments, a positioning structure is provided between the support base 60 and the first support portion 41, and the positioning structure includes at least one positioning protrusion 411 and a positioning groove 61 matching the positioning protrusion 411. One of the positioning protrusion 411 and the positioning groove 61 is provided on the support base 60, and the other of the positioning protrusion 411 and the positioning groove 61 is provided on the first support portion 41.

Optionally, the positioning protrusion 411 is provided on a side of the first support portion 41 facing the support base 60, and the positioning groove 61 is provided on a side of the support base 60 facing the first support portion 41. A number, a size and a position of positioning protrusions 411 match positioning grooves 61.

In the driver monitoring system according to this embodiment, the positioning protrusion 411 and the positioning groove 61 are provided on the first support portion 41 and the support base 60, respectively, so that a quick positioning is facilitated under a condition that the first support portion 41 is connected to the support base 60, and connection stability between the first support portion 41 and the support base 60 is increased.

Referring to Fig. 2, Fig. 5 and Fig. 7, Fig. 7 shows a schematic structural view of a lens hood and a fixing groove in Fig. 2 of an example.

As shown in Fig. 2, Fig. 5 and Fig. 7, in some optional embodiments, the driver monitoring system may further include a lens hood 70, and the lens hood 70 is connected to the support base 60. The lens hood 70 and the first support portion 41 are located on two sides of the support base 60, respectively, a second accommodation cavity (not shown) is formed between the lens hood 70 and the support base 60, and the light-entering side of the camera module 10 is located in the second accommodation cavity.

Optionally, a light-entering side of the lens hood 70 and the light-entering side of the camera module 10 point to the same direction.

In the driver monitoring system according to this embodiment, the lens hood 70 is provided to reduce an effect of ambient light on the camera module 10, so that an imaging effect of the camera module 10 is improved. The curved surface transition segment 33 is provided, so that the second connection segment 32 may be accommodated in the cavity within the A-pillar or the steering column, and only a part of the lens hood 70 is exposed, thus lens hoods 70 may be made by double color injection or connected as an integrated structure through adhesion after separate injection in manufacturing. Polycarbonate (PC) plastic is used for an exposed surface, and ABS resin (poly(acrylonitrile-butadiene-styrene)) is used for a non-exposed surface, so that vehicle interior decoration is ensured, and a cost is reduced.

In some optional embodiments, the support base 60 is connected to the lens hood 70 by a snap-fit structure, and the snap-fit structure includes at least one stop block 62 and a fixing groove 71 matching the stop block 62. One of the stop block 62 and the fixing groove 71 is provided on the support base 60, and the other of the stop block 62 and the fixing groove 71 is provided on the lens hood 70.

Optionally, the stop block 62 is provided on the support base 60, and the catching groove 71 is provided on the lens hood 70. A number, a size and a position of fixing grooves 71 match stop blocks 62.

In the driver monitoring system according to this embodiment, the fixing groove 71 and the stop block 62 are provided on the lens hood 70 and the support base 60, respectively, so that the lens hood 70 may be separated quickly from the support base 60 while connection stability of the lens hood 70 and the support base 60 is increased, so as to facilitate maintenance and overhaul of the driver monitoring system.

In some optional embodiments, the driver monitoring system further includes a lower housing body 80, a third accommodation cavity (not shown) is formed between the lower housing body 80 and the second support portion 42, and at least a part of the second connection segment 32 is located in the third accommodation cavity.

Optionally, the second support portion 42 is provided with at least one positioning pillar 421, and the positioning pillar 421 is used for assisting in positioning of the second connection segment 32 under a condition that the second connection segment 32 is connected to the second support portion 42. The connecting piece passes through the lower housing body 80 and is connected to the second connection segment 32, and connects the lower housing body 80 and the second connection segment 32 to the second support portion 42. The connecting piece may be the bolt.

In some optional embodiments, manufacturing materials of the lower housing body 80 and the second support portion 42 are metal.

In the driver monitoring system according to this embodiment, the third accommodation cavity enclosed by the lower housing body 80 and the second support portion 42 is used for accommodating the second connection segment 32 and the controller 20 on the second connection segment 32, and both the lower housing body 80 and the second support portion 42 are made of metal materials, so that Electromagnetic Magnetic Compatibility (EMC) of the second connection segment 32 and the controller 20 is improved.

In some optional embodiments, the camera module 10 includes a sensor 11 and a lens 12, and the sensor 11 is mounted on the first connection segment 31. The lens 12 is connected to a side of the sensor 11 away from the first connection segment 31, and the lens 12 is formed to extend along the second direction y.

Optionally, the sensor 11 and the light-emitting source 50 are located on two sides of the heat insulation groove 311, respectively. The lens 12 is located in the second accommodation cavity, the lens 12 is mounted on the support base 60 through an adhesion process, and a projection of a light-emitting side of the lens 12 on the first connection segment 31 at least partially overlaps with the projection of the via on the first connection segment 31. After passing through the lens hood 70, the light enters the lens 12 and is collected by the sensor 11, an image signal collected by the sensor 11 is transmitted to the controller 20 by the circuit board 30, and the controller 20 determines a state of the driver through a built-in algorithm and sends a corresponding instruction to other actuators in the automobile.

In some optional embodiments, the camera module 10 further includes a sealing ring 13, the sealing ring is located between the lens 12 and the sensor 11, and the lens 12 is connected to the sensor 11 by the sealing ring 13.

In the driver monitoring system according to this embodiment, the sealing ring 13 is located between the lens 12 and the sensor 11, so that light leakage between the lens 12 and the sensor 11 is reduced, thereby improving the imaging effect of the camera module 10.

As shown in Fig. 1 to Fig. 7, optionally, when the driver monitoring system is assembled, the sealing ring 13 is first placed in a corresponding position on the support base 60 in advance, the first connection segment 31 is pressed against the sealing ring, and the first connection segment 31 is connected to the support base 60 by the bolt after the sealing ring is aligned with the sensor 11 on the first connection segment 31. Thereafter, the support base 60 is aligned with the first support portion 41 by the positioning structure, and the support base 60, the first connection segment 31, and the first support portion 41 are connected as an integrated structure by bolting. Then, the lens 12 is connected to the support base 60 through the adhesion process, and the lens 12 is aligned with the via and the sealing ring 13, so as to prevent dust and water droplets from entering a space between the lens 12 and the sensor 11, and ensure that a space between the lens 12 and the sensor 11 is not light-proof. After the lens 12 is installed, the lens hood 70 is connected to the support base 60 by the snap-fit structure. Next, the second connection segment 32 is bent and aligned with the second support portion 42 by the positioning pillar 421, and subsequently, the lower housing body 80, the second connection segment 32 and the second support portion 42 are connected as an integrated structure by bolting.

Optionally, various components of the driver monitoring system may be connected by bolting, laser welding, adhesion, or the like.

The driver monitoring system according to the embodiments includes the camera module 10, the controller 20 and the circuit board 30, the camera module 10 is configured to collect the driver information, and the controller 20 is configured to receive and process the driver information collected by the camera module 10. The circuit board 30 includes the first connection segment 31, the second connection segment 32, and the curved surface transition segment 33; the first connection segment 31 is formed to extend along the first direction x, the camera module 10 is mounted on the first connection segment 31, the second connection segment 32 is formed to extend along the second direction y, the controller 20 is mounted on the second connection segment 32, the curved surface transition segment 33 is bent from the first connection segment 31 away from the light-entering side of the camera module 10, and the second connection segment 32 is connected to the side of the curved surface transition segment 33 away from the first connection segment 31. By using the integrated design in which both the camera module 10 and the controller 20 are mounted on the circuit board 30, wires between the camera module 10 and the controller 20 are reduced, so that the installation process is simplified By bending the curved surface transition segment by approximately 90 degrees, the second connection segment 32 for mounting the controller 20 may extend along the direction away from the light-entering side of the camera module 10, so that the volume of the driver monitoring system is reduced. Under a condition that the driver monitoring system is arranged on the A-pillar or the steering column of the automobile, the second connection segment 32 may be accommodated in the cavity within the A-pillar or the steering column through the curved surface transition segment 33, so that the difficulty of arranging the driver monitoring system is reduced.

The above are only specific implementations of the present disclosure, those skilled in the art may clearly understand that the specific working processes of the above systems, modules and units may be referred to the corresponding processes in the foregoing method embodiments, which is not repeated here for the convenience and brevity of the description. It should be understood that the protection scope of the present disclosure is not limited to this, and any person skilled in the art can easily think of various equivalent modifications or replacements within the technical scope disclosed in the present disclosure, and these modifications or replacements should all be covered within the scope of protection of the present disclosure.

## Claims

1. A driver monitoring system, comprising:
a camera module (10) configured to collect driver information;
a controller (20) configured to receive the driver information collected by the camera module (10); and
a circuit board (30) comprising a first connection segment (31), a second connection segment (32), and a curved surface transition segment (33), wherein the first connection segment (31) is formed to extend along a first direction (x), and the camera module (10) is mounted on the first connection segment (31); the curved surface transition segment (33) is bent from the first connection segment (31) away from a light-entering side of the camera module (10); the second connection segment (32) is connected to a side of the curved surface transition segment (33) away from the first connection segment (31), the second connection segment (32) is formed to extend along a second direction (y), the controller (20) is mounted on the second connection segment (32), and the second direction (y) intersects with the first direction (x).

2. The driver monitoring system according to claim 1, further comprising an upper housing body (40) that comprises a first support portion (41) and a second support portion (42), wherein the first support portion (41) is configured to support the first connection segment (31), the first support portion (41) and the camera module (10) are located on two sides of the first connection segment (31), respectively, and the second support portion (42) is configured to support the second connection segment (32).

3. The driver monitoring system according to claim 2, further comprising a light-emitting source (50) mounted on the first connection segment (31), wherein the light-emitting source (50) and the first support portion (41) are located on two sides of the first connection segment (31), respectively, and the light-emitting source (50) emits light toward the light-entering side of the camera module (10); and
wherein the upper housing body (40) further comprises a heat dissipation portion (43) that is located on a side of the first support portion (41) away from the first connection segment (31), and an orthographic projection of the heat dissipation portion (43) on the first support portion (41) at least partially overlaps with an orthographic projection of the light-emitting source (50) on the first support portion (41).

4. The driver monitoring system according to claim 3, wherein the heat dissipation portion (43) comprises at least one heat dissipation rib (431), a plurality of the heat dissipation ribs (431) extend along a third direction (z), the heat dissipation ribs (431) are connected between the first support portion (41) and the second support portion (42), and the third direction (z) intersects with both the first direction (x) and the second direction (y).

5. The driver monitoring system according to claim 3 or 4, wherein the upper housing body (40) further comprises a boss portion (44) that protrudes from the first support portion (41) toward the first connection segment (31), and an orthographic projection of the boss portion (44) on the first support portion (41) at least partially overlaps with the orthographic projection of the light-emitting source (50) on the first support portion (41).

6. The driver monitoring system according to any one of claims 3 to 5, wherein the first connection segment (31) is provided with a heat insulation groove (311) penetrating through the first connection segment (31), and the light-emitting source (50) and the camera module (10) are located on two sides of the heat-insulation groove (311), respectively.

7. The driver monitoring system according to any one of claims 2 to 6, further comprising a support base (60) that is connected to the first support portion (41), a first accommodation cavity is formed between the support base (60) and the first support portion (41), and at least a part of the first connection segment (31) is located in the first accommodation cavity.

8. The driver monitoring system according to claim 7, wherein the support base (60) is provided with a via extending along the second direction (y), and a projection of the camera module (10) on the first connection segment (31) at least partially overlaps with a projection of the via on the first connection segment (31).

9. The driver monitoring system according to claim 7 or 8, wherein a positioning structure is provided between the support base (60) and the first support portion (41), the positioning structure comprises at least one positioning protrusion (411) and a positioning groove (61) matching the positioning protrusion (411), one of the positioning protrusion (411) and the positioning groove (61) is provided on the support base (60), and the other of the positioning protrusion (411) and the positioning groove (61) is provided on the first support portion (41).

10. The driver monitoring system according to any one of claims 7 to 9, further comprising a lens hood (70) that is connected to the support base (60), the lens hood (70) and the first support portion (41) being located on two sides of the support base (60), respectively, wherein a second accommodation cavity is formed between the lens hood (70) and the support base (60), and the light-entering side of the camera module (10) is located in the second accommodation cavity.

11. The driver monitoring system according to claim 10, wherein the lens hood (70) is connected to the support base (60) by a snap-fit structure, the snap-fit structure comprises at least one stop block (62) and a fixing groove (71) matching the stop block (62), one of the stop block (62) and the fixing groove (71) is provided on the support base (60), and the other of the stop block (62) and the fixing groove (71) is provided on the lens hood (70).

12. The driver monitoring system according to any one of claims 2 to 11, further comprising a lower housing body (80) that is connected to the second support portion (42), wherein a third accommodation cavity is formed between the lower housing body (80) and the second support portion (42), and at least a part of the second connection segment (32) is located in the third accommodation cavity.

13. The driver monitoring system according to any one of claims 1 to 12, wherein the camera module (10) comprises:
a sensor (11) mounted on the first connection segment (31); and
a lens (12) that is connected to a side of the sensor (11) away from the first connection segment (31) and is formed to extend along the second direction (y).

14. The driver monitoring system according to any one of claims 1 to 13, wherein the circuit board (30) comprises a rigid printed circuit board and a flexible printed circuit board, the first connection segment (31) and the second connection segment (32) are the rigid printed circuit boards, and the curved surface transition segment (33) is the flexible printed circuit board.

15. The driver monitoring system according to any one of claims 1 to 14, wherein the first direction (x) is perpendicular to the second direction (y), or an included angle formed between the first direction (x) and the second direction (y) is between 70 degrees and 110 degrees.
